# EUROPÄISCHE PATENTSCHRIFT

(11) **EP 2 725 316 B1**
(45) Veröffentlichungstag und Bekanntmachung des Hinweises auf die Patenterteilung: **31.12.2014**
(21) Anmeldenummer: 12189816.7
(22) Anmeldetag: 24.10.2012
(51) Int. Cl.: F27B 17/02, F27D 19/00, A61C 13/20

(54) **Ofen mit Sicherheitsprogramm**
Oven with safety program
Four avec programme de sécurité

(43) Veröffentlichungstag der Anmeldung: 30.04.2014
(73) Patentinhaber: Ivoclar Vivadent AG, 9494 Schaan (LI)
(72) Erfinder: Brotzge, Michael, 6842 Koblach (AT); Lorünser, Johannes, 6700 Bludenz (AT)
(74) Vertreter: Baronetzky, Klaus

(56) Entgegenhaltungen:
- EP-A1- 2 058 616
- DE-A1- 3 831 539
- DE-A1-102004 026 107
- DE-B4- 19 754 077
- DE-U1-202010 011 110

## Beschreibung

Die Erfindung betrifft einen Brenn- oder Pressofen für Dentalrestaurationen, gemäß dem Oberbegriff von Anspruch 1.

Solche Dentalöfen für das Brennen und ggf. Verpressen von Dentalrestaurationsteilen sind seit langem bekannt. In derartigen Dentalöfen wird ein Dentalrestaurationsteil oder werden eine Mehrzahl von Dentalrestaurationsteilen einem Brennvorgang oder Pressvorgang unterworfen, und zwar programmgesteuert nach vorgegebenen Temperatur- und ggf. Pressprofilen.

Die Qualität der erzeugten Dentalrestaurationsteile hängt wesentlich davon ab, dass die vorgesehenen und an das vorhandene Dentalrestaurationsmaterial angepassten Parameter während des Brennens und ggf. Verpressens genau eingehalten werden. Hierzu gehören nicht nur das einzuhaltende Temperaturprofil, sondern bspw. auch die bestehenden Druckverhältnisse während des Brennzyklus.

Zu derartigen Dentalrestaurationsteilen gehören aus Kunststoff, aus Metall, aus Komposit, aber insbesondere auch aus Keramik herzustellende Dentalrestaurationsteile.

Durch die zu verarbeitenden Materialien, die Größe, aber auch durch die Anzahl und Form der gleichzeitig herzustellenden Dentalrestaurationsteile wird unter anderem die Gesamtwärmekapazität der zu verarbeitenden Dentalrestaurationsteile bestimmt. Damit kann eine Anpassung der Heizleistung erforderlich werden, wozu an diesen Brenn- oder Pressöfen über eine Eingabevorrichtung verschiedene Verarbeitungsprogramme aufgerufen werden können, in welchen optimale Betriebsparameter für die entsprechenden Rahmenbedingungen (Material, Größe etc.) hinterlegt sind. Durch das Aufrufen und Starten des passenden Verarbeitungsprogramms wird ein Brennprozess zur Erreichung einer optimalen Produktqualität angestrebt.

Derartige Dentalöfen umfassen im Wesentlichen eine Ofenbasis, auf der die zu brennenden Dentalrestaurationsteile, ggf. in einer Muffel, aufgenommen werden, einer Ofenhaube, welche neben einer thermischen Isolierung auch meist die Heizvörrichtung (z.B. elektrische Heizwendeln) aufnimmt, und eine Steuereinrichtung mit einer daran angeschlossenen Anzeige- und Eingabevorrichtung. Die Steuervorrichtung umfasst weiterhin eine Speichervorrichtung, in der die Verarbeitungsprogramme hinterlegt sind. Die Eingabevorrichtung kann ihrerseits zum Teil mit der Anzeigevorrichtung in Form einer berührungsempfindlichen Anzeige (Touchscreen) kombiniert sein und darüber hinaus aber in an sich bekannter Weise dezidierte oder über die Anzeige mit veränderbarer Funktion belegte Tasten ("Soft Keys") aufweisen.

Ein solcher Dentalofen wird beispielsweise in der DE 197 54 077 B4 beschrieben. Auf einer Anzeigevorrichtung können sowohl Parameter numerisch als auch in verschiedenfarbigen Kurvendarstellungen, die sich mit einander überlagern lassen, angezeigt werden. Eingaben sind über Tasten möglich, wodurch ein Brennprogramm, wenn nötig, modifiziert werden kann. Dokument DE 38 31539 A1 beschreibt einen ähnlichen Ofen.

Grundsätzlich ist mit der Programmierung eines solchen Ofens eine einfache und effektive Möglichkeit gegeben, dass die korrekte Einstellung der nötigen Parameter durch eine erfahrene Fachkraft oder schon beim Hersteller des Ofens erfolgen kann und die Bedienung des Ofens (Beschicken, Starten des Brennprogramms etc.) durch einen weniger erfahrenen Bediener erfolgen kann, da hierfür keine detaillierten Kenntnisse nötig sind.

Gegenwärtig ergeben sich bei Großlabors überraschend Qualitätsprobleme beim Einsatz von programmgesteuerten Dentalöfen.

Um diesen Problemen entgegenzuwirken, hat man versucht, die Menüs der Dentalöfen zu vereinfachen, was jedoch auch mit einer Verkomplizierung der Programmierung dieser Öfen, die ja grundsätzlich gewünscht ist, um auch komplexere Verarbeitungsprogramme automatisieren zu können, einhergehen kann. Trotzdem konnten bisher die vorgenannten Qualitätsprobleme wie deutlich sichtbare Schwankungen in der Farbgebung der fertig gebrannten Dentalrestaurationsteile nicht beseitigt werden.

Daher liegt der Erfindung die Aufgabe zugrunde, einen Dentalofen gemäß dem Oberbegriff von Anspruch 1 zu schaffen, mit welchem die Arbeit im Dentallabor auch bei komplexen Anforderungen und hohen Qualitätserwartungen vereinfacht wird, ohne dass die Bedienung der Dentalöfen über das in der Praxis relevante Maß hinaus kompliziert würde.

Diese Aufgabe wird erfindungsgemäß durch Anspruch 1 gelöst. Vorteilhafte Weiterbildungen ergeben sich aus den Unteransprüchen.

Die grundlegende Bedienung eines derartigen Brennofens wie bspw. das Öffnen der Ofenhaube, das nach dem Beschicken mit dem Brenngut erfolgende Schließen des Ofens und der Start des von einem dazu berechtigten Vorgesetzten entsprechend dem zu verarbeitenden Material und den weiteren Randbedingungen (Größe der Denatlteile etc.) vorher eingestellten Verarbeitungsprogramms kann erfindungsgemäß ohne weiteres durch einen geringer qualifizierten Bediener erfolgen.

Durch das Vorsehen eines "sicheren" Betriebsmodus in einem Dentalofen gemäß der vorliegenden Erfindung und die damit verbundene starke Beschränkung der von einem zur Programmierung des Ofens nicht qualifizierten Mitarbeiter aufrufbaren Menüfunktionen ergibt sich überraschend eine deutlich vereinfachte Bedienung, bei gleichzeitig signifikant erhöhter Sicherheit beim Betrieb des Ofens.

In dem erfindungsgemäßen Sicherheitsmodus ist es dem geringer qualifizierten Bedienpersonal insofern lediglich erlaubt, bspw. den Ofen im Standymodus (zum Beschicken) zu öffnen, ein vorher durch einen Vorarbeiter ausgewähltes Verarbeitungsprogramm zu starten und nach beendetem Programm (wobei der Ofen sich hier wieder im Standbymodus befindet) den Ofen wieder zu öffnen.

Der Zugriff auf die Programmierung des erfindungsgemäßen Ofens und auch bspw. ein Abbruch des Brennprogramms sind für einen solchen Bediener jedoch gesperrt, um die für die fertig gebrannten Dentalteile geforderte Qualität gewährleisten zu können.

Eine Fehlbedienung, ein unzulässiger Abbruch des Brennzyklus oder auch unzulässigerweise wissentlich, aber in gutem Glauben über entsprechende Menüfunktionen an den in den Programmen hinterlegten Parametern vorgenommene Änderungen durch einen geringer qualifizierten Mitarbeiter sind damit praktisch nicht mehr möglich.

Mit zunehmendem Kostendruck steigt im Produktionsprozess die Anzahl der weniger erfahrenen bzw. nicht speziell ausgebildeten Arbeitskräfte, die im Wesentlichen die eigentliche Bedienung der Öfen vornehmen, an und demgegenüber nimmt jene der erfahrenen (und teureren) Spezialisten ab.

Durch verstellte Programmparamter oder gar einen Programmabbruch würde sich die Qualität der gebrannten Produkte verschlechtern oder diese im ungünstigsten Fall unbrauchbar machen. Darüber hinaus können neben möglicherweise nicht fristgemäßer Fertigstellung und Lieferung der angeforderten Dentalteile an den Auftraggeber zusätzlich unnötige Material-, Lohn- und Energiekosten verursacht werden. Dies kann erfindungsgemäß mit dem vorgesehenen Sicherheitsmodus wirksam vermieden werden.

Eine weitere Entwicklung, die in diesem Zusammenhang immer stärker zu beobachten ist, ist die Beschäftigung fremdsprachiger Mitarbeiter im Produktionsprozess, was zusätzlich noch Verständnisprobleme der in den Öfen verwendeten Bediensprache nach sich ziehen kann.

Erfindungsgemäß besonders günstig ist es, dass durch die Verwendung von Symbolen und Piktogrammen auf den zu benutzenden Bedienelementen sowie in den Menüs überdies etwaigen Verständnisproblemen fremdsprachiger Mitarbeiter in einem gewissen Rahmen begegnet werden kann. Auch sprachlich qualifizierten Mitarbeitern wird durch die Verwendung aussagekräftiger Symbole die Bedienung erleichtert, wie auch die Gefahr von Fehlbedienungen reduziert.

Insofern ist es in erfindungsgemäß günstiger Weise an einem solchen Dentalofen vorgesehen, durch einen so genannten Sicherheitsmodus nicht autorisierte Änderungen an den in dem Ofen hinterlegen Verarbeitungsprogrammen auszuschließen, indem der Zugriff auf die Programmierfunktionen in dem erfindungsgemäßen Dentalofen in diesem Sicherheitsmodus gesperrt sind. Darüber hinaus sind weitere Funktionen wie beispielweise "Stop" (Abbruch) oder "Öffnen des Ofens" nicht auswählbar, während ein (bereits gestartetes) Verarbeitungsprogramm läuft und der Zyklus noch nicht vollständig abgeschlossen ist.

Auf der an dem erfindungsgemäßen Ofen befindlichen Anzeigevorrichtung kann in erfindungsgemäß günstiger Weise bspw. lediglich die Nummer des Ofens, die Ofentemperatur, die noch verbleibende Zeit bis zum vollständigen Ablauf des gestarteten Verarbeitungsprogrammes, die Art des gewählten Betriebsmodus sowie einige Informationen über das gewählte Programm, welche für den erfahrenen Techniker von Interesse, für den geringer qualifizierten Bediener jedoch von eher geringer Bedeutung sind, dargestellt sein.

Somit sind im Sicherheitsmodus (vor dem Programmstart) lediglich die Funktionen "Ofen Öffnen" und nach dem nachfolgenden "Ofen schließen" noch "Start" (des Verarbeitungsprogramms) freigegeben. Nach dem Start des Verarbeitungsprogramms ist dann zusätzlich die Funktion "Ofen öffnen" gesperrt, da ein Öffnen des Ofens während des laufenden Programms mit hoher Wahrscheinlichkeit ein nicht verwendbares Produkt zur Folge haben würde. Insofern sind weder die Wahl eines Verarbeitunsprogramms noch die Änderung von Parametern innerhalb des Programms in diesem Sicherheitsmodus möglich.

Durch eine zusätzliche Darstellung entsprechender Symbole bzw. Piktogramme in der Anzeige bzw. auf ggf. vorhanden Bedientasten kann die Bedienung für einen der Bediensprache des Ofens nicht mächtigen Bediener noch zusätzlich vereinfacht werden.

Einem dem geringqualifizierten Bediener vorgesetzten Mitarbeiter (welcher jedoch auch nicht zur Änderung von Parametern in den Programmen berechtigt ist) ist an dem erfindungsgemäßen Ofen durch die Eingabe einer Autorisierung (ID, Passwort etc.) möglich, in einem Prioritäts-Bedienmodus ein Verarbeitungsprogramm zu wählen und den Ofen danach in den Sicherheitsmodus zu schalten.

Zusätzlich zu den beiden vorgenannten Modi mit höchster Sicherheit (Sicherheitsmodus) und geringerer Sicherheit (Prioritäts-Bedienmodus) lässt sich an dem Dentalofen darüber hinaus durch geeignete Autorisierungsmethoden (Eingabe einer ID oder eines Passwortes, Kartenleser o.ä.) ein an sich bekannter Programmiermodus aufrufen, der den uneingeschränkten Zugriff auf die in dem Dentalofen gespeicherten Programme zulässt. Im Programmiermodus können somit Programme modifiziert (Parameter geändert), gänzlich neu erstellt und auch gelöscht werden. Die Eingabe der entsprechenden Parameter und Werte erfolgt dabei in erfindungsgemäß günstiger Weise über die berührungsempfindliche Anzeige (Touchscreen). Darüber hinaus kann aber bspw. ein Laden von vorbereiteten Programmen auch über USB-Stick, LAN-Anschluss oder andere geeignete Mittel erfolgen. In jedem Fall wird der Dentalofen nach erfolgreicher Programmierung wieder in den Sicherheitsmodus versetzt, um ungewollte Programmänderungen zu verhindern.

In erfindungsgemäß günstiger Weise kann diese Einschaltung des Sicherheitsmodus nach Ablauf einer einstellbaren Zeit auch automatisch erfolgen.

In weiterer vorteilhafter Ausgestaltung der Erfindung ist es vorgesehen, dass der Ofen einen Programmiermodus aufweist, in welchem Änderungen mindestens eines Programmes, eine Neuprogrammierung mindestens eines Programmes, eine Änderung mindestens der Reihenfolge der abgespeicherten Programme, eine Änderung der Priorisierung der abgespeicherten Programme und/oder die Autorisierung von Bedienern für die Auswahl der vorgegebenen Programme erstellbar oder änderbar oder löschbar ist.

In weiterer vorteilhafter Ausgestaltung der Erfindung ist es vorgesehen, dass die Eingabevorrichtung in an sich bekannter Weise in die Anzeigevorrichtung integriert ist oder mit dieser gekoppelt ist und insbesondere einen Touchscreen aufweist, der die Bedienung des Ofens mindestens im Sicherheitsmodus ermöglicht.

In weiterer vorteilhafter Ausgestaltung der Erfindung ist es vorgesehen, dass der Ofen mit der Betätigung eines einzigen Bedienfeldes oder einer sonstigen einzigen Steuerfunktion von dem Programmiermodus in den Sicherheitsmodus überführbar ist.

In weiterer vorteilhafter Ausgestaltung der Erfindung ist es vorgesehen, dass der Ofen mit der Eingabe eines Codes oder einer verdeckten Bedienfunktion oder per Fernsteuerung von dem Sicherheitsmodus in den Programmiermodus überführbar ist.

In weiterer vorteilhafter Ausgestaltung der Erfindung ist es vorgesehen, dass im Sicherheitsmodus Brennprogramme und/oder Pressprogramme, je nach Auslegung des Ofens als Brennofen oder Pressofen, anwählbar und durchführbar sind.

In weiterer vorteilhafter Ausgestaltung der Erfindung ist es vorgesehen, dass die Eingabevorrichtung und/oder die Anzeigevorrichtung ein Feld aufweist, das mit "Start" oder einem entsprechenden Symbol versehen ist, wobei das Startfeld im Sicherheitsmodus ein vorgewähltes Programm startet.

In weiterer vorteilhafter Ausgestaltung der Erfindung ist es vorgesehen, dass die Anzeigevorrichtung und/oder die Eingabevorrichtung ein Stoppfeld oder eine entsprechende Funktion, gegebenenfalls als Symbol, aufweist, die sowohl im Programmiermodus als auch im Sicherheitsmodus aktiv ist, und das bereits gestartete Pressprogramm oder Brennprogramm abbricht,.

In weiterer vorteilhafter Ausgestaltung der Erfindung ist es vorgesehen, dass im Sicherheitsmodus bei gestartetem Programm ein Signalfeld und/oder ein akustisches Signal, wie beispielsweise ein Summton, dann aktiv ist, wenn ein Pressprogramm oder ein Brennprogramm, je nach Art des Brennofens oder Pressofens, gestartet ist und abläuft.

In weiterer vorteilhafter Ausgestaltung der Erfindung ist es vorgesehen, dass beim Ende eines Programms im Sicherheitsmodus das Programmende in an sich bekannter Weise über ein optisches und/oder akustisches Signal signalisiert wird und/oder der Ofen automatisch oder manuell in einen Energiesparmodus eintritt.

In weiterer vorteilhafter Ausgestaltung der Erfindung ist es vorgesehen, dass die Anzeigevorrichtung und/oder die Eingabevorrichtung ein Feld aufweist, das der Programmierung zugeordnet ist und insbesondere mit "P" bezeichnet ist, welches Feld im Sicherheitsmodus die Auswahl des Programmes aus denjenigen Programmen zulässt, die dem Bediener zur Verfügung stehen und im Programmiermodus die freie Programmierung von Programmen, insbesondere die Änderung, Neuanlegung und Löschung von Programmen, ermöglicht.

In weiterer vorteilhafter Ausgestaltung der Erfindung ist es vorgesehen, dass die Anzeigevorrichtung und/oder die Eingabevorrichtung ein "Home"-Feld und/oder ein Feld für die Eingabe eines Codes aufweist, das im Programmiermodus und insbesondere auch im Sicherheitsmodus aktiv und ansteuerbar ist und über welches der Ofen in einen Ausgangszustand zurücksetzbar ist, in welchem eine freie Programmierung im Programmiermodus bzw. eine freie Bedienung im Sicherheitsmodus möglich ist.

In weiterer vorteilhafter Ausgestaltung der Erfindung ist es vorgesehen, dass die Anzeigevorrichtung und/oder Eingabevorrichtung mindestens ein Symbolfeld für das Öffnen des Ofens und mindestens ein Symbolfeld für das Schließen des Ofens aufweist , welche aktiv sind, wenn kein Brenn-/Pressprogramm abläuft.

In weiterer vorteilhafter Ausgestaltung der Erfindung ist es vorgesehen, dass zusätzlich zu dem Sicherheitsmodus und dem Programmiermodus ein Prioritäts-Bedienmodus anwählbar ist, insbesondere durch Aktivierung eines Anwahlfeldes aus dem Programmiermodus und/oder durch Eingabe eines Codes aus dem Sicherheitsmodus, in welchem der Bediener über die Funktionen des Sicherheitsmodus hinausgehend weitere Parameter einstellen kann, insbesondere temporär Brennparameter und/oder Pressparameter von Programmen ändern kann.

In weiterer vorteilhafter Ausgestaltung der Erfindung ist es vorgesehen, dass ein Hochsicherheitsmodus anwählbar ist, in welchem lediglich ein einziges Brenn-/Pressprogramm startbar ist, und welcher zum Sicherheitsmodus, zum Prioritäts-Bedienmodus und/oder zum Programmiermodus hin durch Eingabe eines Codes verlassbar ist.

Weitere Vorteile, Einzelheiten und Merkmale mehrerer Ausführungsbeispiele ergeben sich aus der nachstehenden Beschreibung der Erfindung.

Es zeigen:
- Fig. 1: eine schematische Ansicht eines Dentalofens gemäß dem Stand der Technik;
- Fig. 2: eine schematische Ansicht der Anzeige- und Eingabevorrichtung während des Betriebs des erfindungsgemäßen Ofens;
- Fig. 3: eine schematische Ansicht der Anzeige- und Eingabevorrichtung gemäß Fig. 2 bei offener Haube im Standbymodus des erfindungsgemäßen Ofens ; und
- Fig. 4: eine schematische Ansicht der Anzeige- und Eingabevorrichtung gemäß Fig. 2 bei geschlossener Haube im Standbymodus des erfindungsgemäßen Ofens.

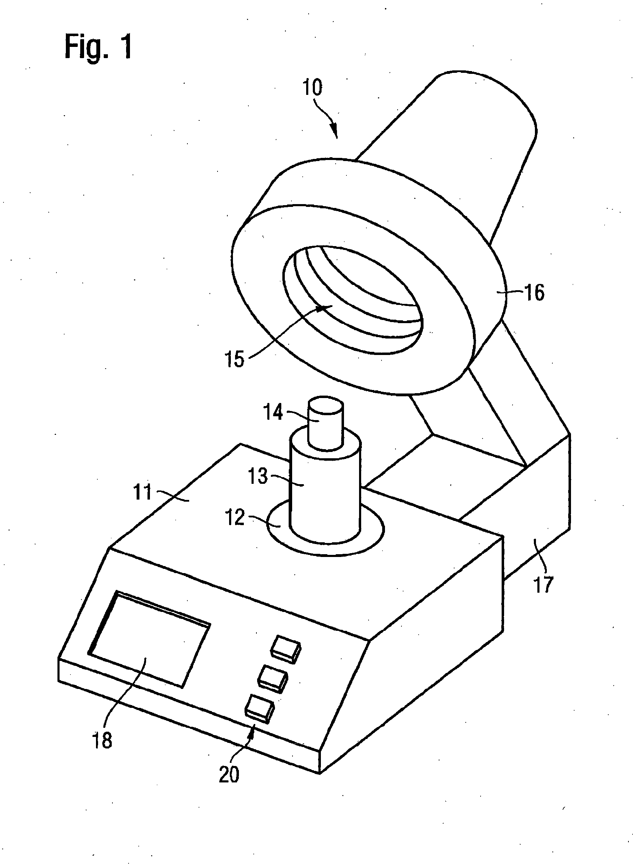

Ein Dentalofen 10 weist eine Ofenbasis 11 mit einem Brennraumboden 12 auf, der dafür bestimmt ist, das Brenngut, beispielsweise eine Muffel 13 (hier mit eingesetztem Rohling 14 dargestellt), aufzunehmen. Für das Brennen wird das Brenngut in einem in Fig. 1 nur schematisch angedeuteten Brennraum 15 aufgenommen, der in der Ofenhaube 16; die mit einem Gelenk 17 mit der Ofenabasis verbunden ist, ausgebildet ist. Wenn es sich bei dem erfindungsgemäßen Dentalofen 10 um einen Pressofen handelt, weist dieser zusätzlich, bevorzugt in der Ofenhaube 16 eine Vorrichtung zum Verpressen des zu verarbeitenden Dentalmaterials auf, auf deren Darstellung heir jedoch aus Gründen der besseren Übersichtlichkeit verzichtet wurde.

Der Dentalofen 10 weist darüber hinaus eine Anzeigevorrichtung 18 und Tasten 20 auf, die mit einer - ebenfalls nicht dargestellten - Steuervorrichtung mit Speichervorrichtung zusammenwirken.

In dem in Fig. 1 dargestellten Zustand ist die Ofenhaube 16 (einschließlich des Brennraums 15) angehoben, so dass das Brenngut eingegeben werden kann.

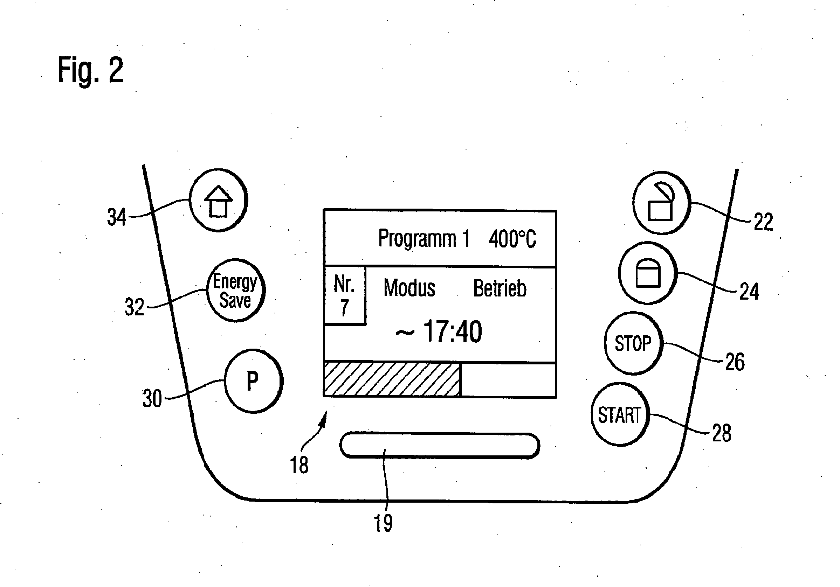

Fig. 2 stellt das Anzeigenfeld eines erfindungsgemäßen Dentalofens 10 mit der Anzeige 18 sowie den Tasten 20 im Betriebszustand des Ofens, also während eines laufenden Verarbeitungsgprogramms, ersichtlich. Bei der Anzeige 18 handelt es sich in erfindungsgemäß günstiger Weise um eine berührungsempfindliche Anzeige (Touchscreen), über welche bspw. in an sich bekannter Weise eine Auswahl eines Verarbeitungsprogramms, aber auch detaillierte Eingaben zu Programmparametern usw. erfolgen kann.

Zentral in dem Anzeigenfeld befindet sich die berührungsempfindliche Anzeige 18, auf der neben der Ofentemperatur, dem aktuellen Betriebsmodus, der Ofennummer, der verbleibenden Programmlaufzeit (numerisch und als Balken dargestellt) noch einige Details des gewählten Programms dargestellt werden. Unterhalb der Anzeige 18 befindet sich, ebenfalls zentral, eine breite Leuchtanzeige 19, die im Betriebsmodus rot leuchtet, um zu signalisieren, dass eine Bedienung des Dentalsofens während des laufenden Prgrammbetriebs nicht möglich ist.

Auf der rechten Seite neben der Anzeige 18 finden sich die Tasten 22 (für "Ofen öffnen" und 24 ("Ofen schließen") sowie die Tasten 26 (für "Stop") und 28 ("Start"), welche zusätzlich farblich kodiert sein können, bspw. rot für "Stop" und grün für "Start".

Auf der linken Seite neben der Anzeige 18 befinden darüber hinaus die Tasten für den Programmiermodus 30 ("P"), 32 (für einen Energiesparmodus) sowie die Taste 34 ("Home").

Da im Sicherheitsmodus über die berührungsempfindliche Anzeige lediglich Informationen angezeigt, jedoch keine Eingaben getätigt werden sollen, ist die Berührungsempfindlichkeit in diesem Modus deaktiviert.

Erfindungsgemäß sind im Betriebsmodus, also während des laufenden Verarbeitungsprogramms, auch alle Tasten (22, 24, 26, 28) auf der rechten Seite gesperrt, da weder der Ofen geöffnet noch das Programm beendet (abgebrochen) werden darf.

Mit der Taste 30 ("P") kann der Programmiermodus, der erfindungsgemäß im Sicherheitsmodus jedoch nur über die Eingabe einer geeigneten Autorisierung aufrufbar ist, ausgweählt werden. Eine Eingabe kann beispielsweise in an sich bekannter Weise über ein auf der berührungsempfindlichen Anzeige 18 dargestelltes Tastenfeld erfolgen.

Die Betätigung der Taste "Home" (34) bewirkt, dass der Benutzer den Ofen wieder in einen Ausgangszustand zurückversetzt, d.h. im Falle des aktiven Sicherheitsmodus wieder zur Anzeige der grundlegenden Betriebsparameter (Ofennummer, Temperatur etc.) zurückgelangt. Durch Drücken der Taste "Energy Save" lässt sich der Ofen überdies während der Brennzyklusabschnitte, in denen diese Funktion freigegeben ist, in einen Energiesparmodus schalten.

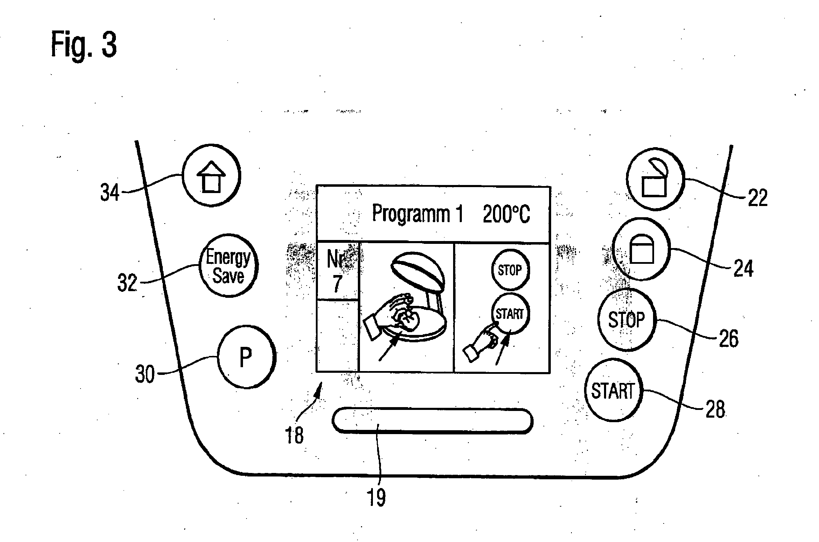

Fig. 3 zeigt, wie Fig. 2, das Anzeigefeld, jedoch hier im Standbymodus des Ofens mit geöffneter Ofenhaube. In diesem Zustand kann der Dentalofen neu beschickt werden, was in der Anzeige 18 mit einer entsprechenden Abbildungen dargestellt wird. Die Leuchtbalkenänzeige 19 unterhalb der Anzeige 18 leuchtet in diesem Fall grün, da die Bedienung des Dentalofens in diesem Fall möglich ist. Im rechten unteren Teil der Anzeige 18 ist überdies symbolisch dargestellt, welche Taste vom Bediener zum Start des Verarbeitungsprogramms gedrückt werden muss. Durch Druck auf die Taste 26 ("Start") schließt sich die Ofenhaube selbsttätig, und das Verarbeitungsprogramm beginnt nach dem vollständigen Schließen mit dem Aufheizen des Brennraumes.

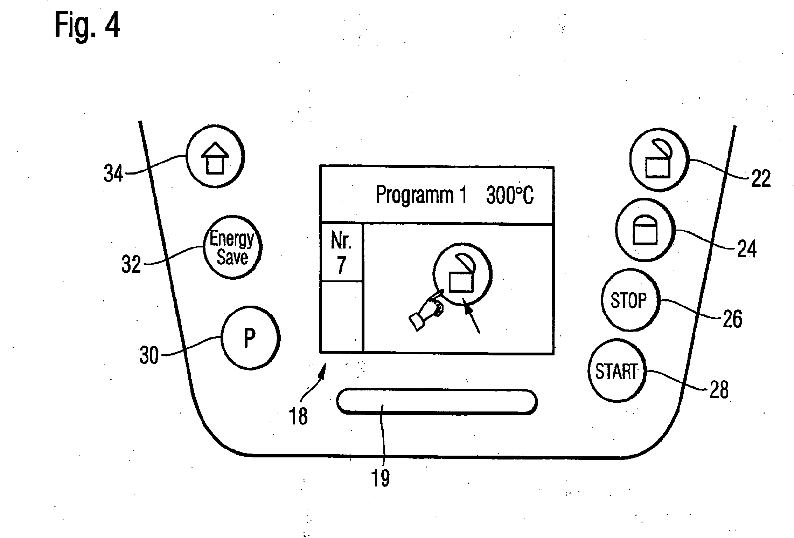

Fig. 4 zeigt darüber hinaus das Anzeigefeld im Standbymodus des Ofens mit geschlossener Ofenhaube, d.h., nach Beendigung des Verarbeitungsprogramms. In diesem Fall ist die Bedienung der Taste 22 ("Ofen öffnen") freigegeben, sodass das fertig gebrannte Dentalrestaurationsteil entnommen werden kann. Auch in diesem Fall ist dies mit einer entsprechenden Abbildung in der Anzeige 18 dargestellt, und die Leuchtbalkenanzeige 19 leuchtet grün, da die Bedienung des Dentalofens nun wieder möglich ist.

## Patentansprüche

1. Brennofen oder Pressofen für Dentalrestaurationen, welcher umfasst:
eine Steuereinrichtung für die Steuerung des Ofens (10) auf der Basis mindestens eines Brenn-/Pressprogramms;
eine Anzeigevorrichtung (18), mindestens für die Anzeige von Bedienhinweisen anhand von symbolischen Darstellungen;
eine Eingabevorrichtung (20), mindestens für die Auswahl eines Brenn-/Pressprogramms;
wobei die Steuereinrichtung so eingerichtet ist, dass der Ofen (10) nach Auswahl eines Steuerprogramms in einen Sicherheitsmodus schaltbar ist, in dem er ein oder mehrere Bedienhinweise anzeigt und in welchem die Eingabe von Brenn- oder Pressparametern des Steuerprogramms und/oder die Auswahl eines Brenn- oder Pressprogramms gesperrt ist.

2. Brennofen oder Pressofen nach Anspruch 1, **dadurch gekennzeichnet, dass** der Ofen (10) einen Programmiermodus aufweist, in welchem Änderungen mindestens eines Programmes, eine Neuprogrammierung mindestens eines Programmes, eine Änderung mindestens der Reihenfolge der abgespeicherten Programme, eine Änderung der Priorisierung der abgespeicherten Programme und/oder die Autorisierung von Bedienern für die Auswahl der vorgegebenen Programme erstellbar oder änderbar oder löschbar ist.

3. Brennofen oder Pressofen nach einem der vorhergehenden Ansprüche, **dadurch gekennzeichnet, dass** die Eingabevorrichtung (20) in an sich bekannter Weise in die Anzeigevorrichtung (18) integriert ist oder mit dieser gekoppelt ist und insbesondere einen Touchscreen aufweist, der die Bedienung des Ofens (10) mindestens im Sicherheitsmodus ermöglicht.

4. Brennofen oder Pressofen nach einem der vorhergehenden Ansprüche, **dadurch gekennzeichnet, dass** der Ofen (10) mit der Betätigung eines einzigen Bedienfeldes oder einer sonstigen einzigen Steuerfunktion von dem Programmiermodus in den Sicherheitsmodus überführbar ist.

5. Brennofen oder Pressofen nach einem der vorhergehenden Ansprüche, **dadurch gekennzeichnet, dass** der Ofen (10) mit der Eingabe eines Codes oder einer verdeckten Bedienfunktion oder per Fernsteuerung von dem Sicherheitsmodus in den Programmiermodus überführbar ist.

6. Brennofen oder Pressofen nach einem der vorhergehenden Ansprüche, **dadurch gekennzeichnet, dass** im Sicherheitsmodus Brennprogramme und/oder Pressprogramme, je nach Auslegung des Ofens (10) als Brennofen oder Pressofen, anwählbar und durchführbar sind.

7. Brennofen oder Pressofen nach einem der vorhergehenden Ansprüche, **dadurch gekennzeichnet, dass** die Eingabevorrichtung (20) und/oder die Anzeigevorrichtung (18) ein Feld aufweist, das mit "Start" (28) oder einem entsprechenden Symbol versehen ist, wobei das Startfeld (28) im Sicherheitsmodus ein vorgewähltes Programm startet.

8. Brennofen oder Pressofen nach einem der vorhergehenden Ansprüche, **dadurch gekennzeichnet, dass** die Anzeigevorrichtung (18) und/oder die Eingabevorrichtung (20) ein Stoppfeld (26) oder eine entsprechende Funktion, gegebenenfalls als Symbol, aufweist, die sowohl im Programmiermodus als auch im Sicherheitsmodus aktiv ist, und das bereits gestartete Pressprogramm oder Brennprogramm abbricht,.

9. Brennofen oder Pressofen nach einem der vorhergehenden Ansprüche, **dadurch gekennzeichnet, dass** im Sicherheitsmodus bei gestartetem Programm ein Signalfeld und/oder ein akustisches Signal, wie beispielsweise ein Summton, dann aktiv ist, wenn ein Pressprogramm oder ein Brennprogramm, je nach Art des Brennofens oder Pressofens, gestartet ist und abläuft.

10. Brennofen oder Pressofen nach einem der vorhergehenden Ansprüche, **dadurch gekennzeichnet, dass** beim Ende eines Programms im Sicherheitsmodus das Programmende in an sich bekannter Weise über ein optisches und/oder akustisches Signal signalisiert wird und/oder der Ofen (10) automatisch oder manuell in einen Energiesparmodus eintritt.

11. Brennofen oder Pressofen nach einem der vorhergehenden Ansprüche, **dadurch gekennzeichnet, dass** die Anzeigevorrichtung (18) und/oder die Eingabevorrichtung (20) ein Feld (30) aufweist, das der Programmierung zugeordnet ist und insbesondere mit "P" bezeichnet ist, welches Feld (30) im Sicherheitsmodus die Auswahl des Programmes aus denjenigen Programmen zulässt, die dem Bediener zur Verfügung stehen und im Programmiermodus die freie Programmierung von Programmen, insbesondere die Änderung, Neuanlegung und Löschung von Programmen, ermöglicht.

12. Brennofen oder Pressofen nach einem der vorhergehenden Ansprüche, **dadurch gekennzeichnet, dass** die Anzeigevorrichtung (18) und/oder die Eingabevorrichtung (20) ein "Home"-Feld (34) und/oder ein Feld für die Eingabe eines Codes aufweist, das im Programmiermodus und insbesondere auch im Sicherheitsmodus aktiv und ansteuerbar ist und über welches der Ofen (10) in einen Ausgangszustand zurücksetzbar ist, in welchem eine freie Programmierung im Programmiermodus bzw. eine freie Bedienung im Sicherheitsmodus möglich ist.

13. Brennofen oder Pressofen nach einem der vorhergehenden Ansprüche, **dadurch gekennzeichnet, dass** die Anzeigevorrichtung (18) und/oder Eingabevorrichtung (20) mindestens ein Symbolfeld (22) für das Öffnen des Ofens (10) und mindestens ein Symbolfeld für das Schließen (24) des Ofens (10) aufweist, welche aktiv sind, wenn kein Brenn-/Pressprogramm abläuft.

14. Brennofen oder Pressofen nach einem der vorhergehenden Ansprüche, **dadurch gekennzeichnet, dass** zusätzlich zu dem Sicherheitsmodus und dem Programmiermodus ein Prioritäts-Bedienmodus anwählbar ist, insbesondere durch Aktivierung eines Anwahlfeldes aus dem Programmiermodus und/oder durch Eingabe eines Codes aus dem Sicherheitsmodus, in weichem der Bediener über die Funktionen des Sicherheitsmodus hinausgehend weitere Parameter einstellen kann, insbesondere temporär Brennparameter und/oder Pressparameter von Programmen ändern kann.

15. Brennofen oder Pressofen nach einem der vorhergehenden Ansprüche, **dadurch gekennzeichnet, dass** ein Hochsicherheitsmodus anwählbar ist, in welchem lediglich ein einziges Brenn-/Pressprogramm startbar ist, und welcher zum Sicherheitsmodus, zum Prioritäts-Bedienmodus und/oder zum Programmiermodus hin durch Eingabe eines Codes verlassbar ist.

## Claims

1. A firing furnace or press furnace for dental restorations, comprising:
a control device for the control of the furnace (10) on the basis of at least one firing/press program;
a display device (18), at least for displaying operating instructions based on symbolic representations;
an input device (20), at least for selecting a firing/press program;
wherein the control device is configured to be able to switch the furnace (10) after selection of a control program to a security mode in which it displays one or several operating Instructions and in which the input of firing or press parameters of the control program and/or the selection of a firing or press program is disabled.

2. The firing furnace or press furnace according to claim 1, **characterized in that** the furnace (10) comprises a programming mode in which changes to at least one program, reprogramming of at least one program, a change to at least the sequence of the stored programs, a change to the priorization of the stored programs and/or the authorization of users for the selection of the given programs can be produced, changed or deleted.

3. The firing furnace or press furnace according to one of the preceding claims, **characterized in that** the input device (20) is integrated in the display device (18) in a manner known per se, or coupled to it, and in particular comprises a touch screen facilitating the operation of the furnace (10) at least in the security mode.

4. The firing furnace or press furnace according to one of the preceding claims, **characterized in that** the furnace (10) can be transferred from the programming mode to the security mode upon actuation of one single control panel or any other single control function.

5. The firing furnace or press furnace according to one of the preceding claims, **characterized in that** the furnace (10) can be transferred from the security mode to the programming mode by entering a code or a hidden control function or via remote control.

6. The firing furnace or press furnace according to one of the preceding claims, **characterized in that** in the security mode firing programs and/or press programs can be selected and executed depending on the design of the furnace (10) as a firing furnace or press furnace.

7. The firing furnace or press furnace according to one of the preceding claims, **characterized in that** the input device (20) and/or the display device (18) comprises a field which is provided with "Start" (28) or a corresponding symbol, wherein the start field (28) starts a preselected program in the security mode.

8. The firing furnace or press furnace according to one of the preceding claims, **characterized in that** the display device (18) and/or the input device (20) comprises a stop field (26) or a corresponding function, possibly as a symbol, which is active both in the programming mode and in the security mode and terminates the press program or firing program which has already been started.

9. The firing furnace or press furnace according to one of the preceding claims, **characterized in that** in the security mode, once a program has been started, a signal field and/or an acoustic signal, for instance a buzzing sound, is active when a press program or a firing program, depending on the type of firing furnace or press furnace, has been started and is running.

10. The firing furnace or press furnace according to one of the preceding claims, **characterized in that** at the end of a program in the security mode the end of program is signaled by an optical and/or acoustic signal in a manner known per se and/or the furnace (10) enters into an energy saving mode automatically or manually.

11. The firing furnace or press furnace according to one of the preceding claims, **characterized in that** the display device (18) and/or the input device (20) comprises a field (30) which is associated with the programming and is in particular designated by "P", which field (30), in the security mode, allows to select the program out of the programs available to the user and, in the programming mode, facilitates to freely program programs, in particular to change, set up and delete programs.

12. The firing furnace or press furnace according to one of the preceding claims, **characterized in that** the display device (18) and/or the input device (20) comprises a "Home" field (34) and/or a field for entering a code which is active and controllable both in the programming mode and in particular in the security mode and which is used to reset the furnace (10) to an initial state in which free programming in the programming mode or free operation in the security mode is possible.

13. The firing furnace or press furnace according to one of the preceding claims, **characterized in that** the display device (18) and/or input device (20) comprises at least one symbol field (22) for opening the furnace (10) and at least one symbol field for closing (24) the furnace (10) which fields are active when no firing/press program is running.

14. The firing furnace or press furnace according to one of the preceding claims, **characterized in that** in addition to the security mode and the programming mode a priority operating mode is selectable, in particular by activating a selection field from the programming mode and/or by entering a code from the security mode in which the user can set further parameters, in particular change firing parameters and/or press parameters of programs temporarily, beyond the functions of the security mode.

15. The firing furnace or press furnace according to one of the preceding claims, **characterized in that** a high security mode is selectable in which only one single firing/press program can be started and which can be left for the security mode, the priority operating mode and/or the programming mode by entering a code.

## Revendications

1. Four de cuisson ou four de pressée pour des restaurations dentaires, comprenant :
un dispositif de commande pour la commande du four (10) sur la base d'au moins un programme de cuisson/programme de pressée ;
un dispositif d'affichage (18), au moins pour l'affichage d'instructions de commande au moyen de représentation symboliques ;
un dispositif d'entrée (20), au moins pour la sélection d'un programme de cuisson/programme de pressée ;
le dispositif de commande étant conçu de telle manière qu'après sélection d'un programme de commande le four (10) peut être commuté vers un mode de sécurité, où il affiche une ou plusieurs instructions de commande et où l'entrée de paramètres de cuisson ou de paramètres de pressée du programme de commande et/ou la sélection d'un programme de cuisson ou d'un programme de pressée sont empêchées.

2. Four de cuisson ou four de pressée selon la revendication 1, **caractérisé en ce que** le four (10) présente un mode de programmation où des modifications d'au moins un programme, une reprogrammation d'au moins un programme, une modification au moins de la série des programmes sauvegardés, une modification de la priorisation des programmes sauvegardés et/ou l'autorisation d'opérateurs pour la sélection des programmes définis peuvent être créées, changées ou supprimées.

3. Four de cuisson ou four de pressée selon l'une des revendications précédentes, **caractérisé en ce que** le dispositif d'entrée (20) est intégré au dispositif d'affichage (18) ou couplé à celui-ci de manière connue en soi, et présente en particulier un écran tactile permettant la commande du four (10) au moins en mode de sécurité.

4. Four de cuisson ou four de pressée selon l'une des revendications précédentes, **caractérisé en ce que** le four (10) peut être commuté du mode de programmation vers le mode de sécurité par activation d'un champ de commande unique ou d'une autre fonction de commande unique .

5. Four de cuisson ou four de pressée selon l'une des revendications précédentes, **caractérisé en ce que** le four (10) peut être commuté du mode de sécurité vers le mode de programmation par entrée d'un code ou d'une fonction de commande cachée ou par commande à distance.

6. Four de cuisson ou four de pressée selon l'une des revendications précédentes, **caractérisé en ce qu'**en mode de sécurité, des programmes de cuisson et/ou des programmes de pressée sont sélectionnables et exécutables en fonction de la réalisation du four (10) comme four de cuisson ou four de pressée.

7. Four de cuisson ou four de pressée selon l'une des revendications précédentes, **caractérisé en ce que** le dispositif d'entrée (20) et/ou le dispositif d'affichage (18) comportent un champ identifié par « Start » (28) ou par un symbole correspondant, le champ « Start » (28) lançant un programme présélectionné en mode de sécurité.

8. Four de cuisson ou four de pressée selon l'une des revendications précédentes, **caractérisé en ce que** le dispositif d'affichage (18) et/ou le dispositif d'entrée (20) comportent un champ d'arrêt (26) ou une fonction correspondante, sous forme de symbole le cas échéant, actifs en mode de programmation aussi bien qu'en mode de sécurité, et qui interrompent un programme de pressée ou un programme de cuisson déjà commencé.

9. Four de cuisson ou four de pressée selon l'une des revendications précédentes, **caractérisé en ce qu'**en mode de sécurité, un programme étant lancé, un champ de signalisation et/ou un signal acoustique tel qu'un bourdonnement sont activés lorsqu'un programme de pressée ou un programme de cuisson est lancé et exécuté, en fonction du type de four de cuisson ou de pressée.

10. Four de cuisson ou four de pressée selon l'une des revendications précédentes, **caractérisé en ce qu'**à la fin d'un programme en mode de sécurité, la fin du programme est signalée de manière connue en soi par un signal optique et/ou acoustique, et/ou **en ce que** le four (10) passe automatiquement ou manuellement en mode d'économie d'énergie.

11. Four de cuisson ou four de pressée selon l'une des revendications précédentes, **caractérisé en ce que** le dispositif d'affichage (18) et/ou le dispositif d'entrée (20) comportent un champ (30) affecté à la programmation et identifié en particulier par « P », ledit champ (30) autorisant en mode de sécurité la sélection du programme parmi les programmes disponibles pour l'opérateur et permettant en mode de programmation la libre programmation de programmes, en particulier la modification, la création et la suppression de programmes.

12. Four de cuisson ou four de pressée selon l'une des revendications précédentes, **caractérisé en ce que** le dispositif, d'affichage (18) et/ou le dispositif d'entrée (20) comportent un champ « Home » (34) et/ou un champ pour l'entrée d'un code, lequel est actif et commandable en mode de programmation et en particulier régalement en mode de sécurité, et au moyen duquel le four (10) peut être ramené vers un état initial où est possible une programmation libre en mode de programmation ou une commande libre en mode de sécurité.

13. Four de cuisson ou four de pressée selon l'une des revendications précédentes, **caractérisé en ce que** le dispositif d'affichage (18) et/ou le dispositif d'entrée (20) comportent au moins un champ de symbole (22) pour l'ouverture du four (10) et au moins un champ de symbole pour la fermeture (24) du four (10), lesquels sont actifs quand aucun programme de cuisson/programme de pressée n'est en cours d'exécution.

14. Four de cuisson ou four de pressée selon l'une des revendications précédentes, **caractérisé en ce qu'**en plus du mode de sécurité et du mode de programmation, un mode de commande de priorité est sélectionnable, en particulier par activation d'un champ de sélection dans le mode de programmation et/ou par entrée d'un code dans le mode de sécurité, où l'opérateur peut régler d'autres paramètres au-delà des fonctions du mode de sécurité, en particulier modifier temporairement des paramètres de cuisson et/ou des paramètres de pressée de programmes.

15. Four de cuisson ou four de pressée selon l'une des revendications précédentes, **caractérisé en ce qu'**un mode de sécurité élevée peut être sélectionné, où un seul programme de cuisson/programme de pressée peut être lancé, et qui peut être quitté par entrée d'un code vers le mode de sécurité, vers le mode de commande de priorité et/ou vers le mode de programmation.
